# EUROPEAN PATENT SPECIFICATION

(11) **EP 2 755 136 B1**
(45) Date of publication and mention of the grant of the patent: **18.03.2015**
(21) Application number: 13161075.0
(22) Date of filing: 26.03.2013
(51) Int. Cl.: G06F 11/14

(54) **Remote backup system and remote backup method thereof**
Fernsicherungssystem und Fernsicherungsverfahren dafür
Système de sauvegarde à distance et procédé de sauvegarde à distance de celui-ci

(30) Priority: 09.01.2013 TW 102100791
(43) Date of publication of application: 16.07.2014
(73) Proprietor: Giga-Byte Technology Co., Ltd., New Taipei City 231 (TW)
(72) Inventor: Liu, Yi Yuan, 231 New Taipei City, Taiwan (TW); Ma, Mo-Ming, 231 New Taipei City, Taiwan (TW); Kuo, Hsiang Yun, 231 New Taipei City, Taiwan (TW)
(74) Representative: Schwerbrock, Florian

(56) References cited:
- WO-A2-2010/129159
- US-A1- 2010 318 759
- US-A1- 2012 054 477

## Description

### CROSS-REFERENCES TO RELATED APPLICATIONS

### BACKGROUND OF THE INVENTION

### Field of the Invention

This disclosure relates to a remote backup system and a remote backup method thereof, and more particularly to a remote backup system and a remote backup method thereof, which restores the operating system program to the system status before the shutdown procedure via a cloud server.

### Description of the Prior Art

With the advancement of the computer and the internet technologies, computer software no longer limits to one single computer device. By the quickness and remote-accessing characteristics of the internet, the computer system application extends from the original stand-alone operation in one specific place to the cloud operation synchronized in multiple places.

The idea of "cloud" mainly is that through the software or information stored in the cloud servers, user-end computers at different places do not need to store a lot of programs or associated information locally, and users download the software and associated information instantly from the cloud server when users want to use them. This method breaks the space limitation and connects users at different places. By taking a cloud server as an information exchange platform, a user can construct a network with other user-end computers at different places, making information in different places can be exchanged, shared, updated, and synchronized, without the limitation of time and space. Therefore, the idea of the cloud platform applies not only to multinational enterprises or large organizations that need to deal with a large amount of the information but also to lives of general users.

Due to the rapid development of mobile devices, in a cloud system, connection tools of users do not limit to a single computer. A smart phone, a tablet computer, or other electronic devices can be the connection tools used for login of the cloud system. Therefore, users can login the cloud system at different places and by different connection tools, so as to share and access information. For example, desktop computers may be used at home, laptops may be used in the company, and smart phones or tablet computers may be used on the journey.

Some prior arts disclose related technology. US2012/054477A1 discloses a backup service to a computer over a network. The technique involves connecting the computer to the network, and providing a backup data center with read access to a storage device of the computer through the network. The storage device includes a boot record area and a data area. The technique further involves, after read access to the storage device of the computer is provided, performing a backup operation between the computer and the backup data center through the network. The backup operation includes copying at least a portion of a boot record stored in the boot record area of the storage device of the computer to the backup data center through the network. A restore operation is capable of being performed to restore the boot record from the backup data center to the computer through the network as well.

WO2010/129159 discloses an operating system states capture and loading technique that involve the capture and loading of baseline system states. This is accomplished, in one embodiment, by storing the states of a computer's operating system memory that it is desired to restore at a future time. No changes are permitted to the persisted storage associated with the computer. Instead, changes that would have been made to the persisted storage during an ensuing computing session, had they not been prevented, are stored in a separate computing session file. Whenever it is desired to return the operating system to its baseline condition, the stored baseline system memory states are loaded into the operating system memory, in lieu of the operating system memory's current states.

US2010/318759A1 discloses a system and/or a method that facilitates differential transfer and storage of data for network-based backup architectures. A differential compression component can segment a portion of backup information into one or more blocks. In addition, signatures can be generated for each of the one or more blocks. The differential compression component can identify unique blocks from the one or more blocks based upon the generated signatures and signatures of chunks stored in a distributed chunk store. Moreover, a storage component can transfer the unique blocks of the portion of backup information to the distributed chunk store once identified.

However, users may adopt different connection tools. How to provide users personalized software and user interface according to preferences and habit of users, or how to load corresponding system parameter settings according to the needs of users, so as to enhance the operating efficiency, is an important issue on cloud system operation and planning.

Besides, when current computer devices are executing shutdown procedure, the system status will be saved only in the same computer device. The computer system is still not combined with the idea of cloud. And because the backup file in the computer devices may be destroyed due to the damage of the computer system, it's still possible that the computer devices are unable to restore the operating system program to the system status before the shutdown procedure.

### SUMMARY OF THE INVENTION

In view of the above problems, in accordance with the invention, which is defined in detail in the appended independent claims 1 and 4, this disclosure provides a remote backup system and a remote backup method thereof in which a cloud server is as a relay platform, so as to provide a method to restore the operating system program on a user-end computer to the system status before a shutdown procedure and to solve the issue that users can not load personalized software and user interface through different connection tools.

Besides, this disclosure also solve the issue that the computer device is unable to restore the operating system program to the system status before the shutdown procedure because the backup file stored in the same computer are destroyed by the damage of the computer.

The remote backup system includes a first computer and a cloud server. The first computer includes at least one control unit and at least one storage unit, and the storage unit executes at least one operating system program and at least one application program. The cloud server is electronically connected to the first computer. When the first computer is actuated to execute the shutdown procedure, the control unit commands the operating system program and/or the application program to record an executing status and an executed file and to generate a corresponding backup file. Then the control unit transmits the backup file to the cloud server, and the cloud server saves the backup file. When the first computer is booted again and executes a start procedure, the control unit transmits a command signal to the cloud server, and the cloud server receives the command signal and returns the backup file of the first computer to the control unit. Then the control unit receives and loads the backup file to restore the operating system program and/or the application program to the system status before the shutdown procedure.

In a better embodiment, for the described remote backup system, when the control unit transmits the backup file to the cloud server to save the backup file on the cloud server, the control unit transmits the backup file to the storage unit simultaneously. When the first computer is actuated to execute the start procedure, the control unit selectively transmits a command signal to the storage unit or the cloud server, and the storage server or the cloud server receives the command signal and correspondingly returns the backup file of the first computer to the control unit. Then the control unit receives and loads the backup file to restore the operating system program and/or the application program to the system status before the shutdown procedure.

In a better embodiment, the described remote backup system further includes a second computer. The second computer is electronically connected to the cloud server and includes a control unit and a storage unit. When the second computer is actuated to execute the start procedure, the control unit transmits a command signal to the cloud server, and the cloud server receives the command signal and correspondingly returns the backup file of the first computer to the control unit of the second computer. Then the control unit receives and loads the backup file to restore the operating system program and/or the application program to the system status before the shutdown procedure.

In a better embodiment, in the described remote backup system, the first computer is electronically connected to the cloud server and the second computer by a wired network or a wireless network.

In a better embodiment, in the described remote backup system, the cloud server further stores a certification program, and the cloud server determine whether the first computer or the second computer has a permission via the certification program and correspondingly allow/refuse the access request of the first computer or the second computer.

Corresponding to the above remote backup system, a remote backup method is disclosed, which includes the steps of: executing a shutdown procedure on a first computer; commanding an executing operating system program and/or an executing application program to record an executing status and an executed file and to generate a corresponding backup file by a control unit of the first computer; transmitting the backup file to a cloud server by the control unit; correspondingly saving the backup file by the cloud server; actuating the first computer to execute a start procedure; transmitting a command signal to the cloud server by the control server; correspondingly returning the backup file of the first computer to the control unit by the cloud server; and correspondingly loading the backup file by the control unit, so as to restore the operating system program and/or the application program to the system status before the shutdown procedure.

In a better embodiment, the described remote backup method further includes the steps of: transmitting the backup file to a storage unit and the cloud server by the control unit; respectively saving the backup file by the storage unit and the cloud server; actuating the first computer to execute a start procedure; selectively transmitting a command signal to the storage unit and/or the cloud server by the control unit; correspondingly returning the backup file of the first computer to the control unit by the storage unit and/or the cloud server; and correspondingly loading the backup file by the control unit, so as to restore the operating system program and/or the application program to the system status before the shutdown procedure.

In a better embodiment, the described remote backup method further includes the steps of: actuating a second computer to execute the start procedure; optionally transmitting a command signal to the cloud server by a control unit of a second computer; correspondingly returning the backup file of the first computer to the control unit of the second computer by the cloud server; and correspondingly loading the backup file by the control unit, so as to restore the operating system program and/or the application program of the first computer to the system status before the shutdown procedure.

In a better embodiment, the described remote backup method further includes the steps of: connecting to the cloud server by the first computer or the second computer; and determining whether the first computer or the second computer has a permission by a certification program, allowing the access request of the backup file by the cloud server if the permission exists, and denying the access request of the backup file by the cloud server if the permission does not exist.

In a better embodiment, in the described remote backup method, the step of commanding an executing operating system program and/or an executing application program to record an executing status and an executed file and to generate a corresponding backup file by a control unit of the first computer further includes the steps of: determining the versions of the operating system and/or the application program by the control unit, and correspondingly generating information about the versions; correspondingly commanding the operating system program and/or the application program to record the executing status and the executed file and to generate the backup file by the control unit; and commanding shutdown the operating system program and/or the application program by the control unit.

In a better embodiment, in the described remote backup method, the step of correspondingly returning the backup file of the first computer to the control unit of the second computer by the cloud server further includes the step of: detecting the versions of the operating system program and the application program of the second computer by the cloud server, and comparing the versions of the operating system program and the application program with the information about the versions in the backup file; returning the backup file to the control unit of the second computer by the cloud server if the versions are the same, and denying returning the backup file by the cloud server if the versions are different.

In a better embodiment, in the described remote backup method, the step of correspondingly returning the backup file of the first computer to the control unit of the second computer by the cloud server further includes the step of: detecting the versions of the operating system program and the application program of the second computer, comparing the versions of the operating system program and the application program with the information about the versions in the backup file, returning the part of the backup file in which the versions of the operating system program and/or the application program are the same to the control unit of the second computer if the versions are partially same.

By taking the cloud server as a relay platform, users can back up personalized software, user interface, or corresponding system parameters to the remote server according to preference and habit of users, such that users can restore personalized software, user interface, or system parameters by the remote server instead of the backup file in the current local storage. Meanwhile, users can store different personalized software or accustomed user interface by different backup files in cloud server, and users can restore the operation environment they want instantly by loading different backup file, such that the convenience is enhanced.

Besides, this disclosure allows users to load backup files in the cloud server through different electronic devices, such that users can load accustomed user interface and parameter settings and restore the original operation environment or files through different electronic devices. Therefore, even in different countries, through the remote backup system and the remote backup method thereof, users can easily continue the original works, enhancing the convenience a lot.

This disclosure also combines the used backup procedure executed during the shutdown procedure by a computer and the cloud server. Therefore, users can selectively store the system status in the cloud server or the computer. This could help avoid the destruction of the backup file due to the damage of the computer system, resulting in the computer device is unable to restore the operating system to the system status before the shutdown procedure, so as to enhance the stability of the computer system.

### BRIEF DESCRIPTION OF THE DRAWINGS

FIG. 1 is a perspective view of the remote backup system according to a first and a second embodiment;
FIG. 2 is a block diagram of the remote backup system according to the first and second embodiment;
FIG. 3 is a flowchart of the remote backup method according to the first embodiment;
FIG. 4 is a flowchart of the remote backup method according to the second embedment;
FIG. 5 is a perspective view of the remote backup system according to a third embodiment;
FIG. 6 is a block diagram of the remote backup system according to the third embodiment;
FIG. 7 is a flowchart of the remote backup method according to the third embodiment;
FIG. 8 is a flowchart of one implementation of the remote backup method according to the second embodiment; and
FIG. 9 is a flowchart of the other implementation of the remote backup method according to the second embodiment.

### DETAILED DESCRIPTION OF THE INVENTION

A remote backup system and a remote backup method thereof disclosed in this disclosure include three different embodiments, and the inventor will respectively describe them in the followings.

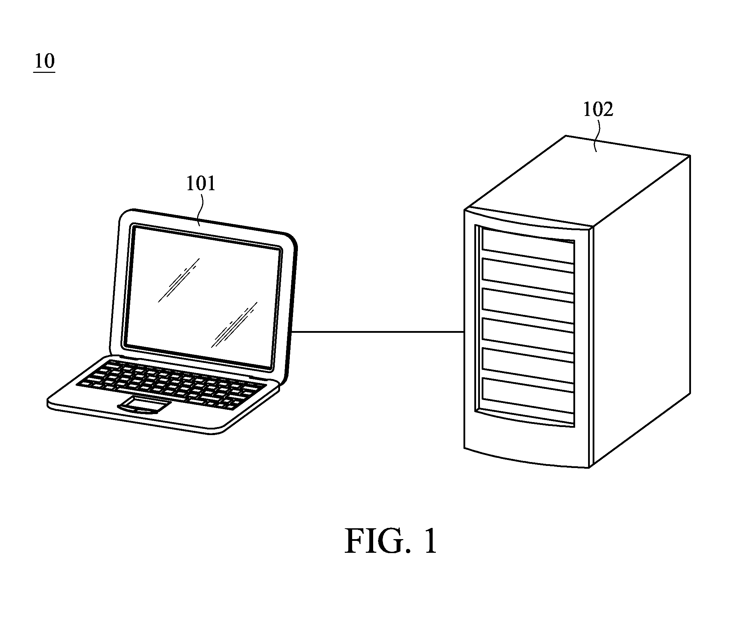

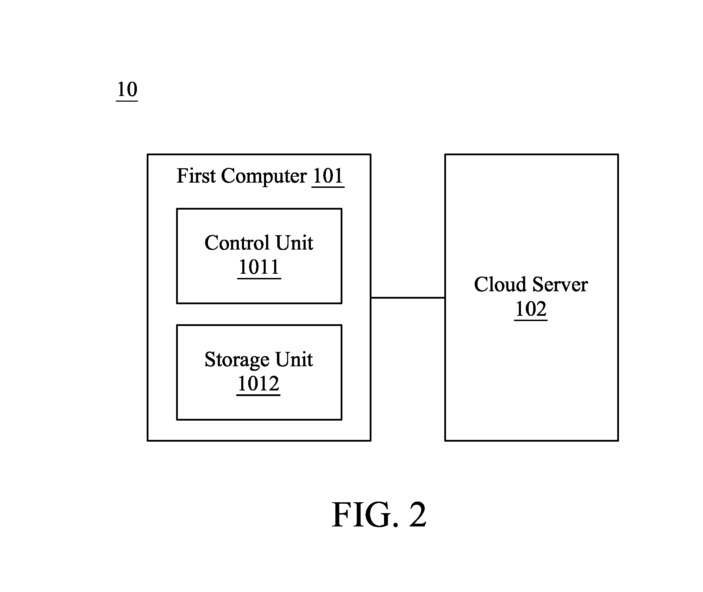

Refer to FIG. 1 and FIG. 2, a remote backup system 10 according to the first embodiment includes a first computer 101 and a cloud server 102. The first computer 101 includes but not limits to a desktop computer, a laptop, a smart phone, and a tablet computer.

The first computer 101 includes at least one control unit 1011 and at least one storage unit 1012, and the control unit 1011 executes at least one operating system program and at least one application program. The operating system program and the application program are stored in the storage unit 1012, and these programs are loaded and then executed by the control unit 1011 on the first computer 101.

The described operating system program includes but not limits to Microsoft Windows (TM), Apple iOS (TM), or Android (TM). People having ordinary skill in the art can make proper modification to the operating system according to the type of the first computer 101, not limited as described herein.

The cloud server 102 is electronically connected to the first computer 101 and is as a backup relay platform, so as to save/load backup files. The cloud server 102 stores a certification program, so as to determine whether the computer connected to the cloud server 102 has a permission and to correspondingly allow/refuse the login request and the access request of the backup files of the computer.

The first computer 101 and the cloud server 102 are electronically connected by a wired network or a wireless network, such as Bluetooth, 802.11e, g, Wimax, and TLE. People having ordinary skill in the art can make proper modification to the network connection method according to the actual needs or design requirements, not limited as described herein.

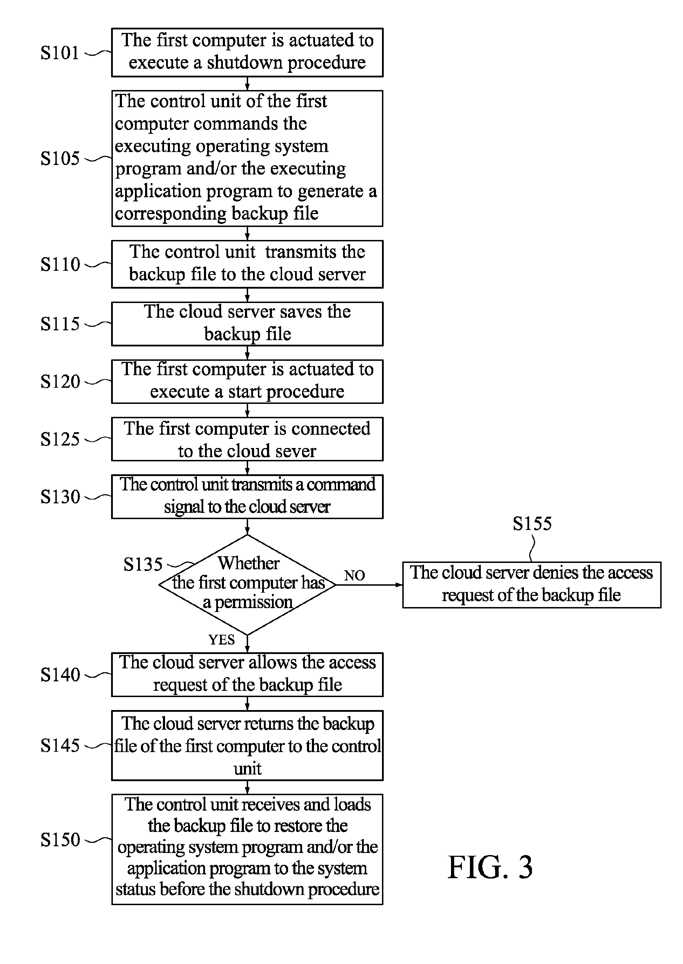

Refer to FIG. 1, FIG. 2, and FIG. 3, the followings describe the remote backup method executed by the remote backup system 10.

First, when a user want to save the settings of the current work environment of the first computer 101, the first computer 101 is actuated to execute a shutdown procedure by the user (S101); the control unit 1011 of the first computer 101 commands the executing operating system program and/or the executing application program to record an executing status and an executed file and to generate a corresponding backup file (S105), and the control unit 1011 transmits the backup file to the cloud server 102 (S110); after the cloud server 102 receives the backup file, the cloud server 102 saves the backup file (S115).

The shutdown procedure described here includes sleep mode (S3), hibernation mode (S4), and soft off mode (S5) in the Advanced Configuration and Power Interface, not limited as described herein.

Besides, in the step 105, the control unit 1011 generates the backup file according to the work environment of the operating system, the system parameters accustomed by users, the executing application program, and any executed files, such that users can load the backup file to restore the current work environment or the current user interface.

In the step 105, users can also save backup file selectively or entirely according to the work environment of the operating system, the system parameters accustomed by users, the executing application program, and any executed files, such that users can load the backup file to restore the part that they need, providing a customized backup function.

After the backup procedure is completed, when users want to load personalized work environment or user interface, the first computer 101 is actuated to execute a start procedure (S120); after the system is started on the first computer 101, the first computer 101 is connected to the cloud sever 102 (S125). Meanwhile, the control unit 1011 transmits a command signal to the cloud server 102 (S130), so as to request the backup file.

When the cloud server 102 receives the command signal, the cloud server 102 determine whether the first computer 101 has a permission via the certification program (S135); if the first computer 101 has the access permission, the cloud server 102 allows the access request of the backup file (S140); if the first computer 101 does not have the access permission, the cloud server 102 denies the access request of the backup file (S155).

If the cloud server 102 allows the access request, the cloud server 102 returns the backup file of the first computer 101 to the control unit 1011 (S145), and the control unit 1011 receives and loads the backup file to restore the operating system program and/or the application program to the system status before the shutdown procedure (S150).

Therefore, through the remote backup system and the remote backup method thereof, users can save a backup file according to the work environment of the operating system, the system parameters accustomed by users, the executing application program, and any executed files via the cloud server 102, and users can optionally load the backup file to restore the current work environment or the current user interface or to continue to execute unfinished works when the first computer 101 is started next time. Therefore, users can operate in the most appropriate system environment according to their needs without resetting the associated system parameters after restart or worrying that the previous executing statue or file is unable to load, enhancing the convenience a lot.

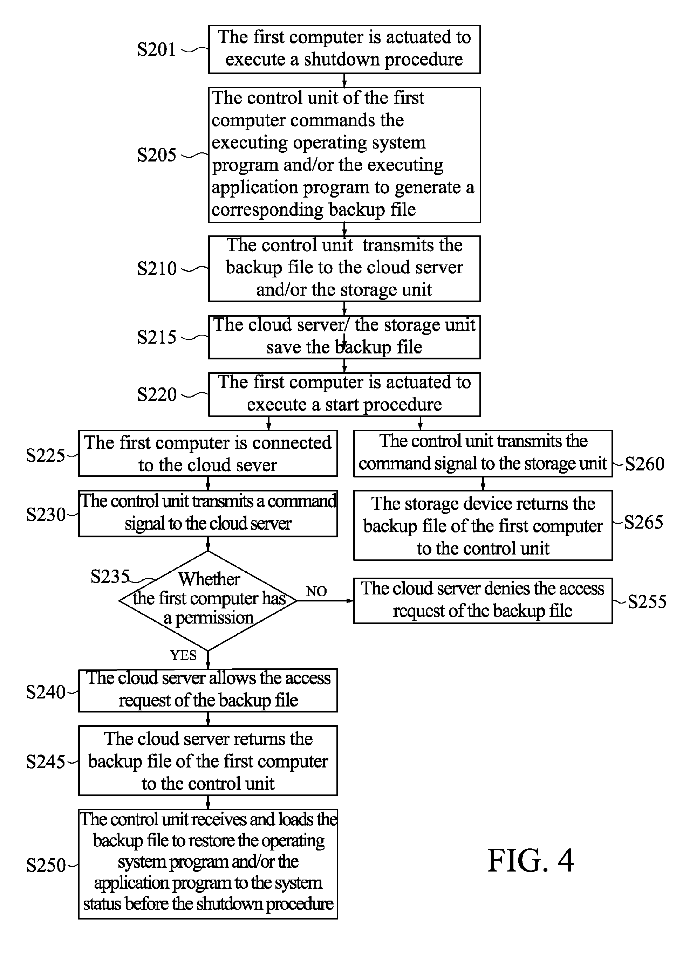

Refer to FIG. 1 to FIG. 4, the remote backup system and the remote backup method (S201~S255) thereof according to the second embodiment are similar to those according to the first embodiment (S101~S155). The difference is that in the second embodiment, when the control unit 1011 transmits the backup file to the cloud server 102, the control unit 1011 transmits the backup file to the storage unit 1012 simultaneously (S210), and the storage unit 1012 and the cloud server 102 correspondingly save the backup file (S215). Therefore, after the first computer 101 is actuated to execute the start procedure (S220), the first computer 101 selectively executes the similar steps according to the first embodiment to load the backup file from the cloud server 102 to restore the operating system program and/or the application program to the system status before the shutdown procedure (S225~S250). The first computer 101 can also selectively transmit the command signal to the storage unit 1012 (S260); after the storage unit 1012 receives the command signal and correspondingly returns the backup file of the first computer 101 to the control unit 1011 (S265), the control unit 1011 receives and loads the backup file to restore the operating system program and/or the application program to the system status before the shutdown procedure (S250).

Through saving the backup file to both the storage unit 1011 and the cloud server 102, the first computer 101 is able to selectively load the backup file from the storage unit 1012 or the cloud server 102 to restore the operating system program and/or the application program to the system status before the shutdown procedure, so as to enhance the flexibility of loading backup files. For example, if the first computer 101 can not be connected to the cloud server 102, the first computer 101 can still restore the operating system program and/or the application program to the system status before the shutdown procedure by loading backup file in the storage unit 1012.

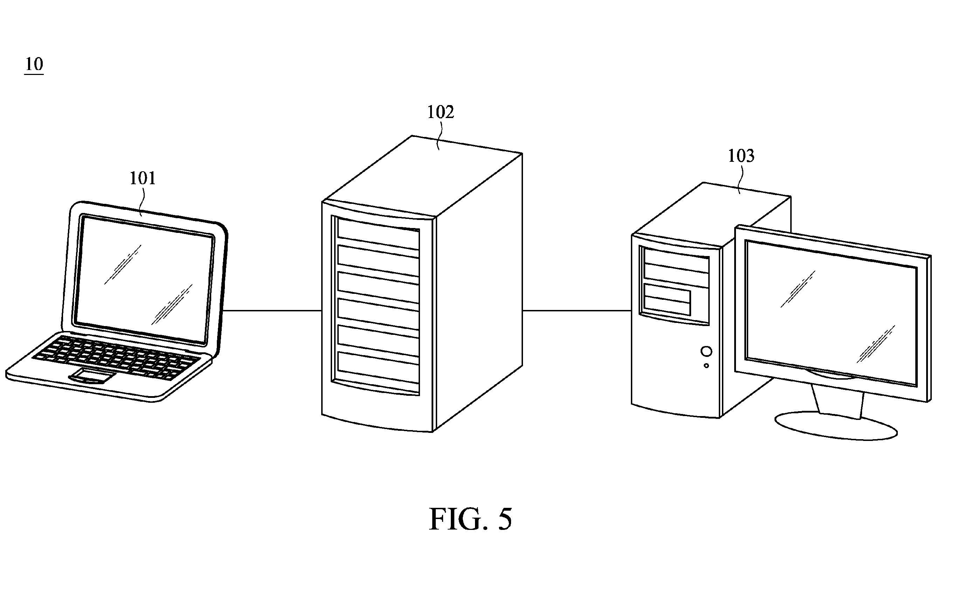

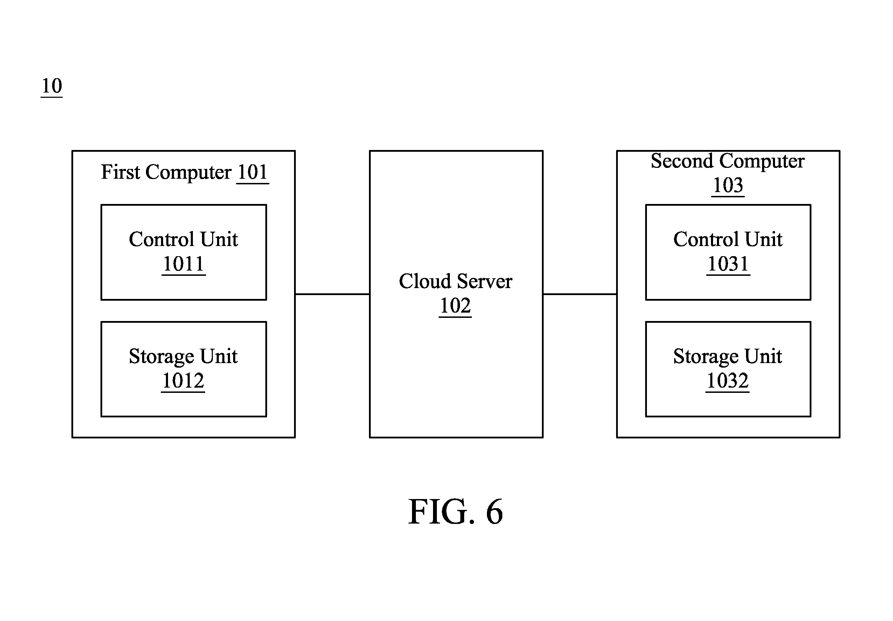

Refer to FIG. 5 and FIG. 6, in addition to the first computer 101 and the cloud server 102, the remote backup system 10 according to the third embodiment includes a second computer 103, which is electronically to the cloud server 102. The second computer 103 includes but not limits to a desktop computer, a laptop, a smart phone, and a tablet computer.

The second computer 103 also includes at least one control unit 1031 and at least one storage unit 1032, so users can load the backup file of the first computer 101 by the second computer 103 to restore the operating system program and/or the application program to the system status of the first computer 101 before the shutdown procedure.

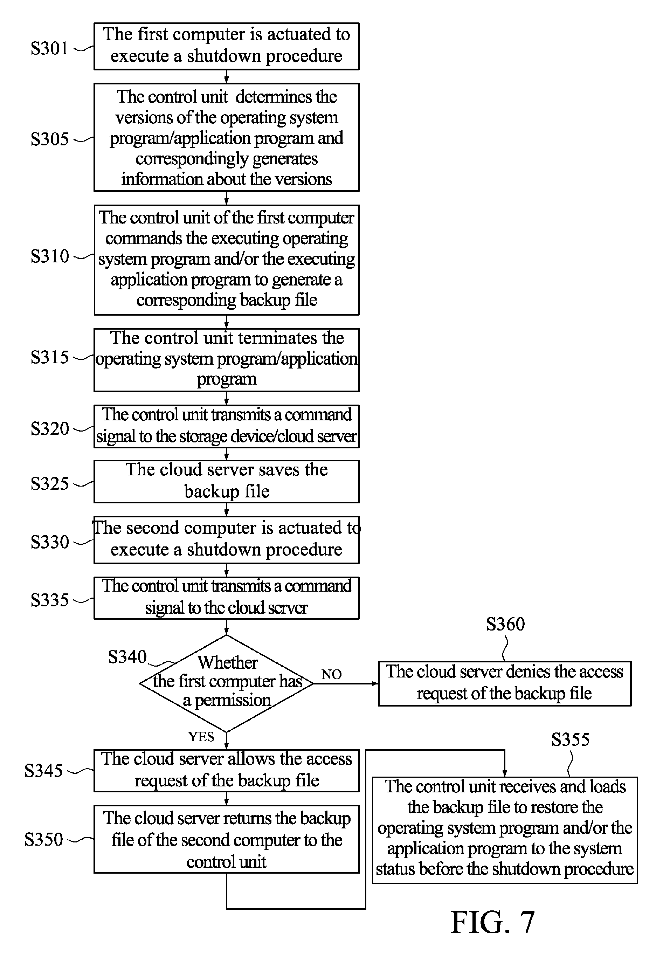

Refer to FIG. 7, when a user uses the first computer 101 such as a laptop to generate a backup file and save it on the cloud server 102 (S301~S325) as the first embodiment at place A, in addition to executing the steps similar to the first embodiment (S301, S310~S325), the step 305 is included: the control unit 1011 determines the versions of the operating system program and/or the application program and correspondingly generates information about the versions. The information about the versions is for verifying whether the backup file is suitable for other computers when other computers is loading the backup file, so as to avoiding the system failure or crash due to the wrong versions of the loaded backup file. The information about the versions is combined into the backup file.

Therefore, when a user wants to use a second computer 103 such as a tablet computer to load the backup file at place B as steps in the first embodiment to restore the operating system program and/or the application program to the system status of the first computer 101 before the shutdown procedure (S330~S360), the difference is that the step 355 further includes two implementations.

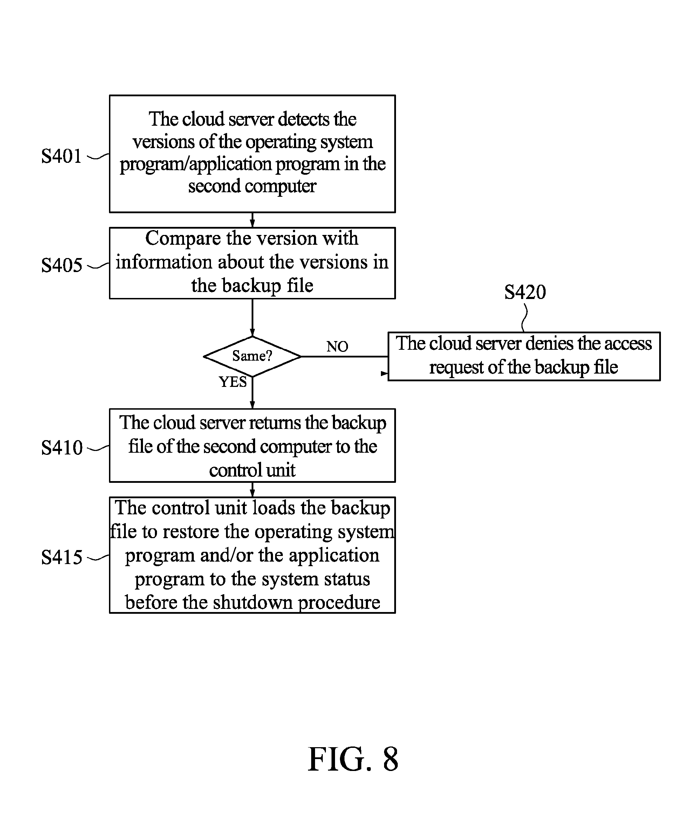

In the first implementation, as shown in FIG. 7 and FIG. 8, in addition to determining whether the second computer 103 has a permission to correspondingly allow/refuse the access request of the second computer 103 (S340, S345, and S360), the cloud server 102 further detects the versions of the operating system program and/or the application program (S401) and compares this with information about the versions in the backup file (S405). If the cloud server 102 detects that the versions of the operating system program and the application program of the second computer 103 are the same with those of the information about the versions in the backup file, it means that the second computer 103 has the same or compatible versions of the operating system program and the application program on the first computer 101, so that the second computer 103 is able to execute the backup file generated by the first computer 101.

Then, the cloud server 102 returns the backup file to the control unit 1031 of the second computer 103 (S410), and the control unit 1031 of the second computer 103 loads the backup file generated by the first computer 101 to restore the operating system program and/or the application program to the system status of the first computer 101 before the shutdown procedure (S415).

The implementation avoids that the second computer 103 loads the backup file with incompatible versions and the system failure or crash due to the wrong versions of the loaded backup file, so as to maintain the system stability of the second computer 103.

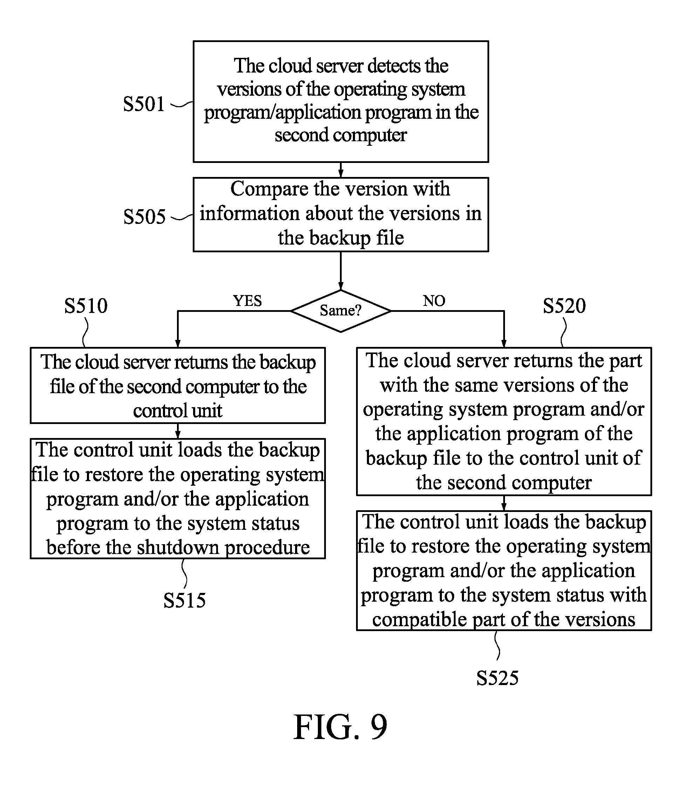

In the second implementation, as shown in FIG. 7 and FIG. 9, the cloud server 102, similar to that in the first implementation, detects the versions of the operating system program and the application program (S501) and compares this with the information about the versions in the backup file (S505). If the cloud server 102 detects that the versions of the operating system program and the application program of the second computer 103 are the same with those of the information about the versions in the backup file, the cloud server 102 returns the backup file to the control unit 1031 of the second computer 103 (S510), and the control unit 1031 of the second computer 103 loads the backup file generated by the first computer 101 to restore the operating system program and/or the application program to the system status of the first computer 101 before the shutdown procedure (S515).

The difference is that when the cloud server 102 detects the versions of the operating system program and the application program of the second computer 103 are not completely the same as the information about the versions in the backup file, for avoiding the system failure or crash due to the execution of incompatible backup file, the cloud server 102 returns the part with the same versions of the operating system program and/or the application program of the backup file to the control unit 1031 of the second computer 103 (S520). The control unit 1031 correspondingly loads the backup file to restore the operating system program and/or the application program to the system status with compatible part of the versions of the second computer 103 before the shutdown procedure (S525).

The second computer 103 selectively loads the part with compatible version of the backup file. Therefore, though the versions of the operating system program and/or the application program of the second computer 103 are not completely compatible to the information about the version in the backup file, the second computer 103 is still able to load the part with compatible version, such that users can operate in part of the original work environment of the first computer 101, without system failure or crash due to wrong versions, maintaining the system stability of the second computer 103.

By taking the cloud server as a relay platform, users can back up personalized software, user interface, or corresponding system parameters to the remote server according to preference and habit of users, such that users can restore personalized software, user interface, or system parameters by the remote server instead of the backup file in the current local storage. Meanwhile, users can store different personalized software or accustomed user interface by different backup files in cloud server, and users can restore the operation environment they want instantly by loading different backup file, such that the convenience is enhanced.

Besides, the remote backup system and the remote backup method thereof disclosed in the three embodiments allows users to load backup files in the cloud server through different electronic devices, say, a user uses a desktop computer to generate a backup file at place A, and then the user can use a tablet computer to load the backup file at place B. Therefore, users can load accustomed user interface and parameter settings and restore the original operation environment or files through different electronic device. Therefore, even in different countries, through the remote backup system and the remote backup method thereof, users can easily continue the original works, enhancing the convenience a lot.

Additionally, the version comparison procedure according to the third embodiment can avoid system failure or crash due to different or incompatible versions of the backup file loaded by different electronic devices, so as to maintain the system stability of the electronic device.

This disclosure also combines the used backup procedure executed during the shutdown procedure by a computer and the cloud server. Therefore, users are selective to store the system status in the cloud server or the computer. This could help avoid the destruction of the backup file due to the damage of the computer system, resulting in the computer device is unable to restore the operating system to the system status before the shutdown procedure, so as to enhance the stability of the computer system.

## Claims

1. A remote backup system (10) comprising:
a first computer (101), including at least one control unit (1011) and at least one storage unit (1012), wherein the storage unit (1012) executes at least one operating system program and at least one application program; and
a cloud server (102), electronically connected to the first computer (101), wherein when the first computer (101) is actuated to execute a shutdown procedure, the control unit (1011) commands the operating system program or the application program to record an executing status or an executed file and to generate a corresponding backup file, the control unit (1011) transmit the backup file to the cloud server (102), and the cloud server (102) saves the backup file;
wherein when the first computer (101) is booted again and executes a start procedure, the control unit (1011) transmits a command signal to the cloud server (102), the cloud server (102) receives the command signal and returns the backup file of the first computer (101) to the control unit (1011), and the control unit (1011) receives and loads the backup file to restore the operating system program or the application program to the system status before the shutdown procedure ; and
a second computer (103), electronically connected to the cloud server (102), including a control unit (1031) and a storage unit (1032); wherein when the second computer (103) is actuated to execute the start procedure, the control unit (1031) transmits a command signal to the cloud server (102), the cloud server (102) receives the command signal and correspondingly returns the backup file of the first computer (101) to the control unit (1031) of the second computer (103), and the control unit (1031) receives and loads the backup file to restore the operating system program or the application program to the system status of the first computer (101) before the shutdown procedure;
wherein, the control unit (1011) determines the versions of the operating system program and/or the application program and correspondingly generates information about the versions, and the information about the versions is combined into the backup file for verifying whether the backup file is suitable for the second computer when the second computer is loading the backup file, and the control unit (1011) commands shutdown of the operating system program or the application program.

2. The remote backup system (10) of claim 1, **characterized by** wherein when the control unit (1011) transmit the backup file to the cloud server (102) to save the backup file on the cloud server (102), the control unit (1011) transmits the backup file to the storage unit (1012) simultaneously; wherein when the first computer (101) is actuated to execute the start procedure, the control unit (1011) selectively transmits the command signal to the storage unit (1012) or the cloud server (102), the storage server (1012) or the cloud server (102) receives the command signal and correspondingly returns the backup file of the first computer (101) to the control unit (1011), and the control unit (1011) receives and loads the backup file to restore the operating system program or the application program to the system status before the shutdown procedure.

3. The remote backup system (10) of claim 1, **characterized by** wherein the cloud server (102) further stores a certification program, and the cloud server (102) determines whether the first computer (101) or the second computer (103) has a permission via the certification program and correspondingly allows/refuses the access request of the first computer (101) or the second computer (103).

4. A remote backup method comprising the steps of:
executing a shutdown procedure on a first computer (101);
commanding an executing operating system program or an executing application program to record an executing status and an executed file and to generate a corresponding backup file by a control unit (1011) of the first computer (101);
transmitting the backup file to a cloud server (102) by the control unit (1011);
correspondingly saving the backup file by the cloud server (102);
actuating the first computer (101) to execute a start procedure;
transmitting a command signal to the cloud server (102) by the control unit (1011);
correspondingly returning the backup file of the first computer (101) to the control unit (1011) by the cloud server (102); and
correspondingly loading the backup file by the control unit (1011), so as to restore the operating system program or the application program to the system status before the shutdown procedure;
actuating a second computer (103) to execute the start procedure;
transmitting a command signal to the cloud server (102) by a control unit (1031) of the second computer (103);
correspondingly returning the backup file of the first computer (101) to the control unit (1031) of the second computer (103) by the cloud server (102); and
correspondingly loading the backup file by the control unit (1031), so as to restore the operating system program or the application program to the system status of the first computer (101) before the shutdown procedure;
wherein the step of commanding an executing operating system program or an executing application program to record an executing status and an executed file and to generate a corresponding backup file by a control unit (1011) of the first computer (101) further includes the steps of:
determining the versions of the operating system program or the application program by the control unit (1011), and correspondingly generating information about the versions, wherein the information about the versions is combined into the backup file for verifying whether the backup file is suitable for the second computer when the second computer is loading the backup file;
commanding the operating system program or the application program to record the executing status and the executed file and to generate the backup file by the control unit (1011); and
commanding shutdown of the operating system program or the application program by the control unit (1011).

5. The remote backup method of claim 4, **characterized by** further comprising the steps of:
transmitting the backup file to a storage unit (1012) and the cloud server (102) by the control unit (1011);
respectively saving the backup file by the storage unit (1012) and the cloud server (102);
actuating the first computer (101) to execute a start procedure;
selectively transmitting a command signal to the storage unit (1012) or the cloud server (102) by the control unit (1011);
correspondingly returning the backup file of the first computer (101) to the control unit (1011) by the storage unit (1012) or the cloud server (102); and
correspondingly loading the backup file by the control unit (1011), so as to restore the operating system program or the application program to the system status before the shutdown procedure.

6. The remote backup method (10) of claim 4, **characterized by** further comprising the steps of:
connecting to the cloud server (102) by the first computer (101) or the second computer (103); and
determining whether the first computer (101) or the second computer (103) has a permission by a certification program, allowing the access request of the backup file by the cloud server (102) if the permission exists, and denying the access request of the backup file by the cloud server (102) if the permission does not exist.

7. The remote backup method of claim 4, **characterized by** wherein the step of correspondingly returning the backup file of the first computer (101) to the control unit (1031) of the second computer (103) by the cloud server (102) further includes the step of:
detecting the versions of the operating system program and the application program of the second computer (103) by the cloud server (102), comparing the versions of the operating system program and the application program of the second computer (103) with the information about the versions in the backup file by the cloud server (102), returning the backup file to the control unit (1031) of the second computer (103) by the cloud server (102) if the versions are the same, and denying returning the backup file by the cloud server (102) if the versions are different.

8. The remote backup method as claimed in Claim 7, **characterized by** wherein the step of correspondingly returning the backup file of the first computer (101) to the control unit (1031) of the second computer (103) by the cloud server (102) further includes the step of:
detecting the versions of the operating system program and the application program of the second computer (103) by the cloud server (102), comparing the versions of the operating system program and the application program of the second computer (103) with the information about the versions in the backup file by the cloud server (102), returning the part of the backup file in which the versions of the operating system program or the application program are the same to the control unit (1031) of the second computer (103) if the versions are partially same.

## Patentansprüche

1. Ein fernbedientes Backup-System (10) einschließlich:
Einen ersten Computer (101), mit mindestens einer Kontrolleinheit (1011) und mindestens einer Speichereinheit (1012), wobei die Speichereinheit (1012) mindestens ein Betriebssystemprogramm und mindestens ein Anwendungsprogramm ausführt. Zudem einen Cloud-Server (102), der elektronisch mit dem ersten Computer (101) verbunden ist, wobei der erste Computer (101) befugt ist, ein Shutdown-Prozedur auszuführen. Die Kontrolleinheit (1011) steuert ein Betriebssystemprogramm oder ein Anwendungsprogramm, um einen Ausführungsstatus oder eine ausgeführte Datei aufzuzeichnen und eine dazugehörige Backup-Datei zu generieren. Die Kontrolleinheit (1011) übermittelt die Backup-Datei an den Cloud-Server (102) und der Cloud-Server (102) speichert die Backup-Datei.
Dabei wird der erste Computer (101) neu gebootet und er führt eine Startprozedur aus, die Kontrolleinheit (1011) übermittelt ein Befehlssignal an den Cloud-Server (102) und der Cloud-Server (102) sendet die Backup-Datei des ersten Computers (101) zur Kontrolleinheit (1011) zurück. Die Kontrolleinheit (1011) erhält und lädt die Backup-Datei, um das Betriebssystem- oder das Anwendungsprogramm zu dem Systemzustand vor der Shutdown-Prozedur wiederherzustellen.
Ein zweiter Computer (103), elektronisch mit dem Cloud-Server (102) verbunden, inklusive einer Kontrolleinheit (1031) und einer Speichereinheit (1032), wobei der zweite Computer (103) befugt ist, eine Startprozedur auszuführen. Die Kontrolleinheit (1031) übermittelt ein Befehlssignal an den Cloud-Server (102). Der Cloud-Server (102) erhält das Befehlssignal und sendet die Backup-Datei des ersten Computers (101) dementsprechend zurück an die Kontrolleinheit (1031) des zweiten Computers (103). Die Kontrolleinheit (1031) erhält und lädt die Backup-Datei , um das Betriebssystem- oder Anwendungsprogramm zu dem Systemstatus des ersten Computers (101) vor der Shutdown-Prozedur wiederherzustellen.
Dabei stellt die Kontrolleinheit (1011) die Versionen der Betriebssystem- und/oder Anwendungsprogramme fest und generiert demenstprechend Informationen über die Versionen. Diese Versionsinformationen werden in die Backup-Datei eingefügt, damit verifizierbar bleibt, ob die Backup-Datei für den zweiten Computer geeignet ist, falls der zweite Computer die Backup-Datei lädt und die Kontrolleinheit (1011) den Shutdown des Betriebssystem- oder Anwendungsprogramm beschließt.

2. Das fernbediente Backup-System (10) aus Anspruch 1, in der die Kontrolleinheit (1011) die Backup-Datei an den Cloud-Server (102) übermittelt, um die Backup-Datei in den Cloud-Server (102) zu speichern. Gleichzeitig übermittelt die Kontrolleinheit (1011) die Backup-Datei an die Speichereinheit (1012), wobei sobald der erste Computer (101) befugt ist, die Startprozedur auszulösen die Kontrolleinheit (1011) wahlweise das Befehlssignal an die Speichereinheit (1012) oder an den Cloud-Server (102) übermittelt. Der Speicher-Server (1012) oder der Cloud-Server (102) erhalten das Befehlssignal und geben die Backup-Datei des ersten Computers (101) dementsprechend an die Kontrolleinheit (1011) weiter. Die Kontrolleinheit (1011) erhält die Backup-Datei und lädt sie, so dass das Betriebssystem- oder Anwendungsprogramm auf den Systemstatus vor der Shutdown-Prozedur wiederhergestellt wird.

3. Das fernbediente Backup-System (10) aus Anspruch 1, wobei der Cloud-Server (102) zusätzlich ein Zertifizierungsprogramm speichert und der Cloud-Server (102) die Befugnis des ersten (101) oder zweiten Computers (103) anhand des Zertifizierungsprogramm feststellt sowie demenstprechend Zugangsanfragen auf den ersten (101) oder zweiten Computer (103) gewährt/verweigert.

4. Eine fernbediente Backup-Methode mit den folgenden Ausführschritten:
Eine Shutdown-Prozedur durch den ersten Computer (101), wodurch ein Hochfahren des Betriebssystem- oder des Anwendungsprogrammes ausgelöst wird, das die Aufzeichung des Ausführungsstatuses und einer Ausführungsdatei bedingt. Eine entsprechende Backup-Datei wird durch die Kontrolleinheit (1011) des ersten Computers (101) generiert.
Die Backup-Datei wird an den Cloud-Server (102) durch die Kontrolleinheit (1011) weitergeleitet.
Dementsprechend wird die Backup-Datei in den Cloud-Server (102) gespeichert, wodurch der erste Computer (101) befugt ist, die Startprozedur auszulösen.
Ein Befehlssignal wird an den Cloud-Server (102) durch die Kontrolleinheit (1011) gesandt.
Dementsprechend wird die Backup-Datei des ersten Computers (101) an die Kontrolleinheit (1011) des Cloud-Servers (102) zurückgesandt.
Dementsprechend wird die Backup-Datei durch die Kontrolleinheit (1011) weitergesandt, so dass das Betriebssystem- oder das Anwendungsprogramm zu dem Systemstatus vor der Shutdown-Prozedur wiederhergestellt werden.
Ein zweiter Computer (103) löst die Startprozedur aus, indem er ein Befehlssignal an den Cloud-Server (102) durch eine Kontrolleinheit (1031) des zweiten Computers (103) übermittelt.
Dementsprechend wird die Backup-Datei des ersten Computers (101) an die Kontrolleinheit (1031) des zweiten Computers (103) durch den Cloud-Server (102) zurückgesandt.
Demenstsprechend wird die Backup-Datei durch die Kontrolleinheit (1021) geladen, so dass das Betriebssystem- oder Anwendungsprogramm zu dem Systemstatus des ersten Computers (101) vor der Shutdown-Prozedur wiederhergestellt werden kann.
Dabei wird der Schritt des Ausführbefehls eines Betriebssystem- oder Anwendungsprogramm anhand eines Ausführungsstatus aufgezeichnet und eine Ausführungsdatei wird durch die Kontrolleinheit (1011) des ersten Computers (101) generiert, was folgende Schritte beinhaltet:
Die Versionen des Betriebssystem- oder Anwendungsprogramm werden durch die Kontrolleinheit (1011) festgestellt und dementsprechend werden Informationen über die Versionen generiert, wobei die Versionsinfos in die Backup-Datei integriert werden, so dass verifizierbar ist, ob eine Backup-Datei geeignet für den zweiten Computer ist, wenn dieser die Backup-Datei lädt.
Das Betriebssystem- oder Anwendungsprogramm erhält den Befehl den Ausführungsstatus und die ausgeführte Datei aufzuzeichnen. Die Backup-Datei wird durch die Kontrolleinheit (1011) generiert.
Der Shutdown des Betriebssystem- oder Anwendungsprogramm wird durch die Kontrolleinheit (1011) ausgelöst.

5. Die fernbediente Backup-Methode aus Anspruch 4, welche die folgenden Schritte beinhaltet:
Die Backup-Datei wird an eine Speichereinheit (1012) und den Cloud-Server (102) durch die erste Kontrolleinheit (1011) übermittelt.
Die Backup-Datei wird jeweils durch die Speichereinheit (1012) und den Cloud-Server (102) gespeichert.
Der erste Computer (101) löst eine Startprozedur aus.
Wahlweise wird ein Befehlssignal an die Speichereinheit (1012) oder den Cloud-Server (102) durch die Kontrolleinheit (1011) übertragen.
Dementsprechend wird die Backup-Datei des ersten Computers (101) zur Kontrolleinheit (1011) durch die Speichereinheit (1012) oder den Cloud-Server (102) zurückgesandt.
Dementsprechend wird die Backup-Datei durch die Kontrolleinheit (1011) geladen, so dass das Betriebssystem- oder Anwendungsprogramm auf den Systemstatus vor der Shutdown-Prozedur zurückgestellt werden.

6. Die fernbediente Backup-Methode (10) aus Anspruch 4, inklusive der folgenden Schritte:
Einen Cloud-Server (102) durch den ersten (101) oder zweiten Computer (103) zu verbinden und festellen, ob der der erste (101) oder zweite Computer (103) über eine Erlaubnis durch ein Zertifizierungsprogramm für eine Zugangsanfrage der Backup-Datei durch den Cloud-Server (102) verfügt. Falls die Erlaubnis besteht, wird Zugang gewährt, falls nicht, wird die Zugangsanfrage durch den Cloud-Server (102) nicht gewährt.

7. Die fernbediente Backup-Methode aus Anspruch 4, einschließlich des Schrittes, die entsprechende Backup-Datei des ersten Computers (101) an die Kontrolleinheit (1031) des zweiten Computers (103) durch den Cloud-Server (102) anhand folgender Schritte zurückzuschicken:
Feststellen der Versionen des Betriebssystem- und Anwendungsprogrammes des zweiten Computers (103) durch den Cloud-Server (102), durch Vergleich der Versionen des Betriebssystem- und des Anwendungsprogrammes auf dem zweiten Computer (103) mit den Informationen über die Versionen in der Backup-Datei innerhalb des Cloud-Servers (102). Falls die Versionen identisch sind, wird die Backup-Datei von dem Cloud-Server (102) zu der Kontrolleinheit (1031) des zweiten Computers (103) zuückgesandt. Falls die Versionen nicht identisch sind, wird die Backup-Datei durch den Cloud-Server (102) nicht zurückgeschickt.

8. Die fernbediente Backup-Methode aus Anspruch 7, charakterisiert durch den Schritt, die Backup-Datei des ersten Computers (101) an die Kontrolleinheit (1031) des zweiten Computers (103) durch den Cloud-Server (102) zurückzuschicken und dabei folgende Schritte auszuführen:
Erfassen der Versionen des Betriebssystemprogrammes und des Anwendungsprogrammes des zweiten Computers (103) durch den Cloud-Server (102) un die Versionen des Betriebssystemprogrammes und des Anwendungsprogrammes des zweiten Computers (103) mit den Informationen über die Versionen in der Backup-Datei durch den Cloud-Server (102) zu vergleichen. Der Teil der Backup-Datei, in dem die Versionen des Betriebssystemprogrammes oder des Anwendungsprogrammes gleich sind, wird zurückgeschickt. Falls die Versionen nur teilweise gleich sind, erfolgt die Rückschickung zu der Kontrolleinheit (1031) des zweiten Computers (103).

## Revendications

1. Un système de sauvegarde à distance (10) comprenant :
un premier ordinateur (101), qui inclut au moins une unité de commande (1011) et au moins une unité de stockage (1012), où l'unité de stockage (1012) exécute au moins un
logiciel du système d'exploitation et au moins un programme d'application ; et
un serveur de nuage (102), électroniquement relié au premier ordinateur (101), où lorsque le premier ordinateur (101) est actionné pour exécuter une procédure d'arrêt, l'unité de commande (1011) commande au logiciel du système d'exploitation ou au programme d'application d'enregistrer un statut d'exécution ou un dossier exécuté et de
produire un dossier de sauvegarde correspondant, l'unité de commande (1011) transmet le dossier de sauvegarde au serveur de nuage (102), et le serveur de nuage (102) enregistre le dossier de sauvegarde ;
dans lequel lorsque le premier ordinateur (101) est redémarré et exécute le procédé d'initialisation, l'unité de commande (1011) transmet un signal de commande au serveur de nuage (102), le serveur de nuage (102) reçoit le signal de commande et renvoie le dossier
de sauvegarde du premier ordinateur (101) à l'unité de commande (1011), et l'unité de commande (1011) reçoit et charge le dossier de sauvegarde pour restaurer le logiciel du système d'exploitation ou le programme d'application au statut du système avant la procédure d'arrêt ; et
un second ordinateur (103), relié électroniquement au serveur de nuage (102), y compris une unité de contrôle (1031) et une unité de stockage (1032) ; dans lequel lorsque le deuxième ordinateur (103) est actionné pour exécuter la procédure de démarrage, l'unité de contrôle (1031) transmet un signal de commande au serveur de nuage(102), le serveur de nuage (102) reçoit le signal de commande et par conséquent renvoie le fichier de sauvegarde du premier ordinateur (101) à l'unité de contrôle (1031) du second ordinateur (103),
et l'unité de commande (1031) reçoit et charge le dossier de sauvegarde pour restaurer le
logiciel du système d'exploitation ou le programme d'application au statut du système du premier ordinateur (101) avant la procédure d'arrêt ; dans laquelle, l'unité de commande (1011) détermine les versions du logiciel
du système d'exploitation et/ou le programme d'application et également produit l'information au sujet des versions, et l'information au sujet des versions est
combinée dans le dossier de sauvegarde pour vérifier si le dossier de sauvegarde convient au second ordinateur lorsque le second ordinateur charge le fichier de sauvegarde et l'unité de commandes (1011) déclenche l'arrêt du... logiciel du système d'exploitation ou du programme d'application.

2. Le système de sauvegarde à distance (10) de la réclamation 1, est caractérisé lorsque l'unité de commande (1011) transmet le fichier de sauvegarde sur le serveur de nuage (102) pour enregistrer le fichier de sauvegarde sur le serveur de nuage (102), l'unité de commande (1011) transmet le fichier de sauvegarde à l'unité de stockage (1012) simultanément ; lorsque le premier ordinateur (101) est actionné pour exécuter la procédure de démarrage, l'unité de commande (1011)
transmet sélectivement le signal de commande à l'unité de stockage (1012) ou au serveur de nuage (102), le serveur de stockage (1012) ou le serveur de nuage (102) reçoit le signal de commande et renvoie également le dossier de sauvegarde du premier ordinateur (101) à l'unité de commande (1011), et l'unité de commande (1011) reçoit et charge le dossier de sauvegarde pour restaurer le logiciel du système d'exploitation ou le programme d'application au
statut du système avant la procédure d'arrêt.

3. Le système de sauvegarde à distance (10) de la réclamation 1, caractérisé lorsque le serveur de nuage (102) stocke en outre un programme de certification, et
que le serveur de nuage (102) détermine si le premier ordinateur (101) ou le second ordinateur (103) a une permission par l'intermédiaire du programme de certification et également permet ou refuse
la demande d'accès du premier ordinateur (101) ou du second ordinateur (103).

4. Une méthode de sauvegarde à distance comprenant les étapes de :
exécuter une procédure d'arrêt sur le premier ordinateur (101) ;
commander à un logiciel de système d'exploitation d'exécution ou à un programme d'application d'exécution d'enregistrer un statut d'exécution et un dossier exécuté et de générer un fichier de sauvegarde correspondant par une unité de commande (1011) du premier ordinateur (101) ;
transmettre le fichier de sauvegarde à un serveur de nuage (102) par l'unité de commande (1011) ;
et en conséquence enregistrer le fichier de sauvegarde par le serveur de nuage (102) ;
activer le premier ordinateur (101) pour exécuter une procédure de démarrage ;
transmettre un signal de commande à un serveur de nuage (102) par l'unité de commande (1011) ;
et en conséquence renvoyer le dossier de sauvegarde du premier ordinateur (101) à l'unité de commande (1011) par le serveur de nuage (102) ; et
en conséquence charger le dossier de sauvegarde par l'unité de commande (1011), afin de restaurer le logiciel du système d'exploitation ou le programme d'application au statut du système avant la procédure d'arrêt ;
activation d'un second ordinateur (103) pour exécuter la procédure de démarrage ;
transmettre un signal de commande à un serveur de nuage (102) par une unité de commande (1031) du second ordinateur (103) ;
et en conséquence renvoyer le dossier de sauvegarde du premier ordinateur (101) à l'unité de commande (1031) du second ordinateur (103) par le serveur de nuage (102) ; et
en conséquence charger le dossier de sauvegarde par l'unité de commande (1031), afin de restaurer le logiciel du système d'exploitation ou le programme d'application au statut du système du premier ordinateur (101) avant la procédure d'arrêt ;
Lorsque l'étape de commander un logiciel de système d'exploitation d'exécution ou d'exécuter un programme d'application pour enregistrer un statut d'exécution et un dossier exécuté et pour produire un dossier de sauvegarde correspondant par une unité de commande (1011) du premier ordinateur (101), inclut en outre les étapes de :
déterminer les versions du logiciel du système d'exploitation ou du programme d'application par l'unité de commande (1011), et produire également des informations sur les versions, lorsque les informations sur les versions sont combinées dans le dossier de sauvegarde pour vérifier si le dossier de sauvegarde convient au second ordinateur quand le second ordinateur charge le dossier de sauvegarde ; commander au logiciel du système d'exploitation ou au programme d'application d' enregistrer le statut d'exécution et le dossier exécuté et de produire le dossier de sauvegarde par l'unité de commande (1011) ; et
commander l'arrêt du logiciel du système d'exploitation ou du programme d'application de l'unité de commande(1011).

5. La méthode de sauvegarde à distance de la réclamation 4, caractérisée pour comprendre en outre les étapes de :
transmission du fichier de sauvegarde à une unité de stockage (1012) et à un serveur de nuage (102) par l'unité de commande (1011) ;
enregistrer respectivement le fichier de sauvegarde par l'unité de stockage (1012) et le serveur de nuage (102) ;
activer le premier ordinateur (101) pour exécuter une procédure de démarrage;
transmettre sélectivement un signal de commande à l'unité de stockage (1012) ou au serveur de nuage (102) par l'unité de commande (1011) ;
et en conséquence renvoyer le dossier de sauvegarde du premier ordinateur (101) à l'unité de commande(1011) par l'unité de stockage (1012) ou le serveur de nuage (102) ; et en conséquence charger le dossier de sauvegarde par l'unité de commande (1011), afin de restaurer le logiciel du système d'exploitation ou le programme d'application au statut du système avant la procédure d'arrêt.

6. La méthode de sauvegarde à distance (10) de la réclamation 4, caractérisée pour comprendre en outre les étapes de :
se relier au serveur de nuage (102) par le premier ordinateur (101) ou le second ordinateur (103) ; et
détermine si le premier ordinateur (101) ou le second ordinateur (103) a une permission par un programme de certification, permettant la demande d'accès du dossier de sauvegarde par le serveur de nuage (102) si la permission existe, et refusant la demande d'accès du dossier de sauvegarde par le serveur de nuage (102) si la permission n'existe pas.

7. La méthode de sauvegarde à distance de la réclamation 4, **caractérisée par** les étapes de :
en conséquence renvoyer le dossier de sauvegarde du premier ordinateur (101) à l'unité de commande (1031) du second ordinateur (103) par le serveur de nuage (102) inclut en outre l'étape de :
détecter les versions du logiciel du système d'exploitation et du programme d'application du deuxième ordinateur (103) par le serveur de nuage (102), comparer les versions du logiciel du système d'exploitation et du programme d'application du deuxième ordinateur (103) avec les informations sur les versions dans le dossier de sauvegarde par le serveur de nuage (102), renvoyant le dossier de sauvegarde à l'unité de commande (1031) du second ordinateur (103) par le serveur de nuage (102) si les versions sont identiques, et refusant le renvoi du dossier de sauvegarde par le serveur de nuage (102) si les versions sont différentes.

8. La méthode de sauvegarde à distance selon la réclamation 7, **caractérisée par** l'étape de renvoi du dossier de sauvegarde du premier ordinateur (101) à l'unité de commande (1031) du second ordinateur (103) par le serveur de nuage (102) inclut en outre l'étape de :
détecter les versions du logiciel du système d'exploitation et du programme d'application du second ordinateur (103) par le serveur de nuage (102), comparer les versions du logiciel du système d'exploitation et du programme d'application du second ordinateur (103) avec les informations sur les versions dans le dossier de sauvegarde par le serveur de nuage (102), retourner la partie du dossier de sauvegarde dans laquelle les
versions du logiciel du système d'exploitation ou du programme d'application sont identiques à l'unité de commande (1031) du second ordinateur (103) si les versions sont partiellement les mêmes.
